# EUROPEAN PATENT APPLICATION

(11) **EP 4 542 263 A1**
(43) Date of publication of application: **23.04.2025**
(21) Application number: 22946210.6
(22) Date of filing: 15.06.2022
(51) Int. Cl.: G01S 19/42, H04W 72/04

(54) **POSITIONING MEASUREMENT METHOD AND APPARATUS FOR GLOBAL NAVIGATION SATELLITE SYSTEM (GNSS)**

(71) Applicant: Beijing Xiaomi Mobile Software Co., Ltd., Beijing 100085 (CN)
(72) Inventor: ZHU, Yajun, Beijing 100085 (CN)
(74) Representative: Gunzelmann, Rainer
(86) International application number: PCT/CN2022/099042
(87) International publication number: WO 2023/240516

(57) **Abstract**

A global navigation satellite system (GNSS) positioning measurement method and apparatus. The method includes: receiving first indication information sent by a network device (201), the first indication information being used to indicate whether the terminal performs wireless communication interaction with the network device when performing positioning measurement; and performing the positioning measurement according to the first indication information (202).

## Description

### TECHNICAL FIELD

The present disclosure relates to the field of communication technology, in particular to a global navigation satellite system (GNSS) positioning measurement method and apparatus.

### BACKGROUND

In a scenario of satellite communication, due to a long signal transmission distance and a long data transmission time, parameters for compensating transmission delay are introduced for transmissions with an uplink and downlink relationship. A terminal needs to obtain its own position information to facilitate uplink synchronization compensation.

When transmitting services requiring the long transmission time, if global navigation satellite system (GNSS) information expires, the terminal needs to re-obtain the GNSS information. In the related art, when the terminal obtains the GNSS information, it will enter an idle state, thereby resulting in increased transmission delay and increased terminal power consumption.

### SUMMARY

According to a first aspect of embodiments of the disclosure, a global navigation satellite system (GNSS) positioning measurement method is provided, the method is performed by a terminal and includes: receiving first indication information sent by a network device, in which the first indication information is configured to indicate whether the terminal performs wireless communication interaction with the network device when performing positioning measurement; and performing the positioning measurement according to the first indication information.

Optionally, the first indication information is configured to indicate that the terminal performs the wireless communication interaction with the network device when performing the positioning measurement. The method further comprises: monitoring a control signaling sent by the network device.

Optionally, the first indication information is configured to indicate that the terminal does not perform the wireless communication interaction with the network device when performing the positioning measurement. The method further comprises: stopping monitoring a control signaling sent by the network device.

Optionally, the method further comprises: receiving first positioning measurement configuration information sent by the network device, wherein the first positioning measurement configuration information comprises at least one of: a time domain position at which the positioning measurement is performed; a time length during which the positioning measurement is performed; or a trigger condition for performing the positioning measurement.

Optionally, the method further comprises: sending auxiliary information to the network device, wherein the auxiliary information comprises at least one of time information required by the terminal to perform the positioning measurement and movement speed information of the terminal.

Optionally, the method further comprises: receiving a plurality of pieces of candidate positioning measurement configuration information sent by the network device, wherein the plurality of pieces of candidate positioning measurement configuration information comprise the first positioning measurement configuration information; and determining the first positioning measurement configuration information from the plurality of pieces of candidate positioning measurement configuration information.

Optionally, determining the first positioning measurement configuration information from the plurality of pieces of candidate positioning measurement configuration information comprises: determining the first positioning measurement configuration information from the plurality of pieces of candidate positioning measurement configuration information according to a correspondence between terminal status information and candidate positioning measurement configuration information; wherein the plurality of pieces of candidate positioning measurement configuration information comprise the terminal status information.

Optionally, determining the first positioning measurement configuration information from the plurality of pieces of candidate positioning measurement configuration information comprises: receiving a control signaling sent by the network device; and determining the first positioning measurement configuration information from the plurality of pieces of candidate positioning measurement configuration information according to the control signaling.

Optionally, the method further comprises: sending second indication information to the network device, wherein the second indication information comprises a terminal capability, and the terminal capability comprises a capability of the terminal to perform the wireless communication interaction with the network device when performing the positioning measurement.

According to a second aspect of embodiments of the disclosure, a GNSS positioning measurement method is provided, the method is performed by a network device and includes: sending first indication information to a terminal; in which the first indication information is configured to indicate whether the terminal performs wireless communication interaction with the network device when performing positioning measurement.

Optionally, the method further comprises: sending first measurement configuration information to the terminal, wherein the first positioning measurement configuration information comprises at least one of: a time domain position at which the positioning measurement is performed; a time length during which the positioning measurement is performed; or a trigger condition for performing the positioning measurement.

Optionally, the method further comprises: receiving auxiliary information sent by the terminal, wherein the auxiliary information comprises at least one of time information required by the terminal to perform the positioning measurement and movement speed information of the terminal.

Optionally, the method further comprises: sending a plurality of pieces of candidate positioning measurement configuration information to the terminal, wherein the plurality of pieces of candidate positioning measurement configuration information comprise the first positioning measurement configuration information.

Optionally, the plurality of pieces of candidate positioning measurement configuration information comprise terminal status information; a correspondence between the terminal status information and positioning measurement configuration information is used for the terminal to determine the first positioning measurement configuration information from the plurality of pieces of candidate positioning measurement configuration information.

Optionally, the method further comprises: sending a control signaling to the terminal; wherein the control signaling is configured to instruct the terminal to determine the first positioning measurement configuration information from the plurality of pieces of candidate positioning measurement configuration information.

Optionally, the method further comprises: receiving second indication information sent by the terminal, wherein the second indication information comprises a terminal capability, and the terminal capability comprises a capability of the terminal to perform the wireless communication interaction with the network device when performing the positioning measurement.

According to a third aspect of embodiments of the disclosure, a GNSS positioning measurement apparatus is provided, the apparatus includes a transceiver unit and a processing unit. The transceiver unit is configured to receive first indication information sent by a network device, in which the first indication information is configured to indicate whether a terminal performs wireless communication interaction with the network device when performing positioning measurement. The processing unit is configured to perform the positioning measurement according to the first indication information.

Optionally, the first indication information is configured to indicate that the terminal performs the wireless communication interaction with the network device when performing the positioning measurement. The transceiver unit is further configured to monitor a control signaling sent by the network device.

Optionally, the first indication information is configured to indicate that the terminal does not perform the wireless communication interaction with the network device when performing the positioning measurement. The transceiver unit is further configured to stop monitoring a control signaling sent by the network device.

Optionally, the transceiver unit is further configured to: receive first positioning measurement configuration information sent by the network device, wherein the first positioning measurement configuration information comprises at least one of: a time domain position at which the positioning measurement is performed; a time length during which the positioning measurement is performed; or a trigger condition for performing the positioning measurement.

Optionally, the transceiver unit is further configured to: send auxiliary information to the network device, wherein the auxiliary information comprises at least one of time information required by the terminal to perform the positioning measurement and movement speed information of the terminal.

Optionally, the transceiver unit is further configured to: receive a plurality of pieces of candidate positioning measurement configuration information sent by the network device, wherein the plurality of pieces of candidate positioning measurement configuration information comprise the first positioning measurement configuration information; and determine the first positioning measurement configuration information from the plurality of pieces of candidate positioning measurement configuration information.

Optionally, transceiver unit is further configured to: determine the first positioning measurement configuration information from the plurality of pieces of candidate positioning measurement configuration information according to a correspondence between terminal status information and candidate positioning measurement configuration information; wherein the plurality of pieces of candidate positioning measurement configuration information comprise the terminal status information.

Optionally, transceiver unit is further configured to: receive a control signaling sent by the network device; and determine the first positioning measurement configuration information from the plurality of pieces of candidate positioning measurement configuration information according to the control signaling.

Optionally, the transceiver unit is further configured to: send second indication information to the network device, wherein the second indication information comprises a terminal capability, and the terminal capability comprises a capability of the terminal to perform the wireless communication interaction with the network device when performing the positioning measurement.

According to a fourth aspect of embodiments of the disclosure, a GNSS positioning measurement apparatus is provided, the apparatus includes a transceiver unit. The transceiver unit is configured to send first indication information to a terminal, in which the first indication information is configured to indicate whether the terminal performs wireless communication interaction with a network device when performing positioning measurement.

Optionally, the transceiver unit is further configured to: send first measurement configuration information to the terminal, wherein the first positioning measurement configuration information comprises at least one of: a time domain position at which the positioning measurement is performed; a time length during which the positioning measurement is performed; or a trigger condition for performing the positioning measurement.

Optionally, the transceiver unit is further configured to: receive auxiliary information sent by the terminal, wherein the auxiliary information comprises at least one of time information required by the terminal to perform the positioning measurement and movement speed information of the terminal.

Optionally, the transceiver unit is further configured to: send a plurality of pieces of candidate positioning measurement configuration information to the terminal, wherein the plurality of pieces of candidate positioning measurement configuration information comprise the first positioning measurement configuration information.

Optionally, the plurality of pieces of candidate positioning measurement configuration information comprise terminal status information; a correspondence between the terminal status information and positioning measurement configuration information is used for the terminal to determine the first positioning measurement configuration information from the plurality of pieces of candidate positioning measurement configuration information.

Optionally, the transceiver unit is further configured to: send a control signaling to the terminal; wherein the control signaling is configured to instruct the terminal to determine the first positioning measurement configuration information from the plurality of pieces of candidate positioning measurement configuration information.

Optionally, the transceiver unit is further configured to: receive second indication information sent by the terminal, wherein the second indication information comprises a terminal capability, and the terminal capability comprises a capability of the terminal to perform the wireless communication interaction with the network device when performing the positioning measurement.

According to a fifth aspect of embodiments of the disclosure, a communication apparatus is provided, including: a processor and a memory for storing computer programs, when the computer programs stored in the memory are executed by the processor, the communication apparatus is caused to execute the GNSS positioning measurement method according to the first aspect of embodiments of the disclosure.

According to a sixth aspect of embodiments of the disclosure, a communication apparatus is provided, including: a processor and a memory for storing computer programs, when the computer programs stored in the memory are executed by the processor, the communication apparatus is caused to execute the GNSS positioning measurement method according to the above second aspect of embodiments of the disclosure.

According to a seventh aspect of embodiments of the disclosure, a communication apparatus is provided, including: a processor and an interface circuit, in which the interface circuit is configured to receive code instructions and transmit the code instructions to the processor; and the processor is configured to run the code instructions to cause the communication apparatus to execute the GNSS positioning measurement method according to the first aspect of embodiments of the disclosure.

According to an eighth aspect of embodiments of the disclosure, a communication apparatus is provided, including: a processor and an interface circuit, in which the interface circuit is configured to receive code instructions and transmit the code instructions to the processor; and the processor is configured to run the code instructions to cause the communication apparatus to execute the GNSS positioning measurement method according to the second aspect of embodiments of the disclosure.

According to a ninth aspect of embodiments of the disclosure, a computer-readable storage medium for storing instructions used by the above terminal is provided, in which when the instructions are executed, the terminal is caused to perform the GNSS positioning measurement method according to the first aspect of embodiments of the disclosure.

According to a tenth aspect of embodiments of the disclosure, a computer-readable storage medium for storing instructions used by the above terminal is provided, in which when the instructions are executed, the terminal is caused to perform the GNSS positioning measurement method according to the second aspect of embodiments of the disclosure.

According to an eleventh aspect of embodiments of the disclosure, a computer program is provided. When the computer program is executed by a computer, the computer is caused to perform the GNSS positioning measurement method according to the first aspect of embodiments of the disclosure.

According to a twelfth aspect of the embodiments of the present disclosure, a computer program is provided. When the computer program is executed by a computer, the computer is caused to perform the GNSS positioning measurement method according to the second aspect of embodiments of the disclosure.

With the GNSS positioning measurement method and apparatus provided in the embodiments of the present disclosure, by receiving the first indication information sent by the network device, in which the first indication information is configured to indicate whether the terminal performs wireless communication interaction with the network device when performing positioning measurement, and performing the positioning measurement according to the first indication information, the terminal can obtain its own position information in a timely and effective manner, thereby effectively reducing the transmission delay and saving the power consumption of the terminal. Meanwhile, the terminal can obtain more accurate uplink synchronization compensation information, thereby avoiding interference in uplink transmissions between different terminals.

Additional aspects and advantages of the present disclosure will be set forth in part in the following description, and in part will be obvious from the following description, or may be learned by practice of the present disclosure.

### BRIEF DESCRIPTION OF THE DRAWINGS

In order to clearly illustrate technical solutions of embodiments of the disclosure or background technologies, a description of drawings used in the embodiments or the background technologies is given below.
FIG. 1a is a schematic structural diagram of a communication system according to an embodiment of the present disclosure.
FIG. 1b is a schematic diagram of an uplink and downlink timing-aligned transmission mode on a network device side according to an embodiment of the present disclosure.
FIG. 1c is a schematic diagram of an uplink and downlink timing-unaligned transmission mode on a network device side according to an embodiment of the present disclosure.
FIG. 2 is a flowchart of a global navigation satellite system (GNSS) positioning measurement method according to an embodiment of the present disclosure.
FIG. 3 is a flowchart of a GNSS positioning measurement method according to an embodiment of the present disclosure.
FIG. 4 is a flowchart of a GNSS positioning measurement method according to an embodiment of the present disclosure.
FIG. 5 is a flowchart of a GNSS positioning measurement method according to an embodiment of the present disclosure.
FIG. 6 is a flowchart of a GNSS positioning measurement method according to an embodiment of the present disclosure.
FIG. 7 is a block diagram of a GNSS positioning measurement apparatus according to an embodiment of the present disclosure.
FIG. 8 is a block diagram of a GNSS positioning measurement apparatus according to an embodiment of the present disclosure.
FIG. 9 is a block diagram of a communication apparatus according to an embodiment of the disclosure.
FIG. 10 is a block diagram of a chip according to an embodiment of the disclosure.

### DETAILED DESCRIPTION

Embodiments will be described in detail hereinafter, examples of which are illustrated in the drawings. When the drawings are referred to in the following description, unless otherwise indicated, same numerals in different drawings represent same or similar elements. The implementations described in the following embodiments do not represent all implementations consistent with the present invention. Rather, they are merely examples of devices and methods consistent with some aspects of the present invention as recited in the appended claims.

The terms used in the present disclosure are for the purpose of describing particular embodiments only and are not intended to limit the present disclosure. The singular forms "a" and "the" used in the present disclosure and the appended claims are intended to include the plural forms as well, unless otherwise indicated in the context clearly. It should also be understood that the term "and/or" used herein refers to the fact that any or all feasible combinations of one or more of the associated listed items may be included.

It should be understood that although the terms "first", "second", "third", etc., may be used in the present disclosure to describe various pieces of information, such information should not be limited to these terms. These terms are used only to distinguish pieces of information that are of the same type. For example, without departing from the scope of the present disclosure, first information may also be referred to as second information, and similarly, second information may also be referred to as first information. Depending on the context, for example, the expressions "if" and "on condition that" used herein may be interpreted as "in a case that" or "when" or "in response to determining".

The embodiments of the present disclosure are described in detail below, examples of which are illustrated in the accompanying drawings. The same or similar reference numerals refer to the same or similar elements throughout. The embodiments described below with reference to the drawings are illustrative and are intended to explain the present disclosure, but should not be construed as limiting the present disclosure.

In order to better understand a global navigation satellite system (GNSS) positioning measurement method disclosed in the embodiments of the present disclosure, a communication system to which the embodiments of the present disclosure may be applied is first described below.

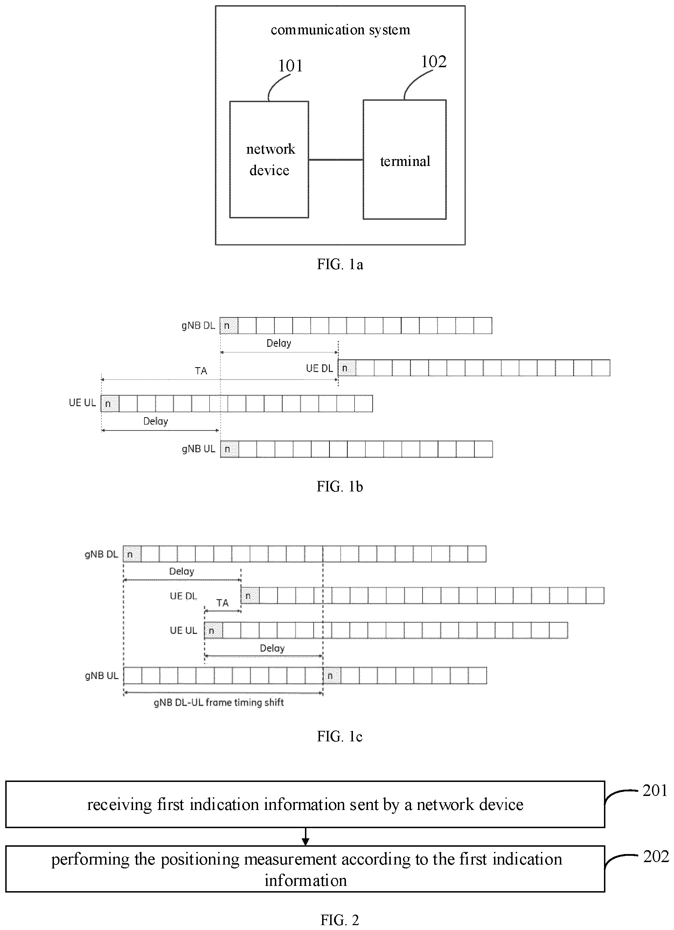

Referring to FIG. 1, FIG. 1 shows a schematic structural diagram of a communication system provided according to an embodiment of the present disclosure. The communication system can include, but is not limited to one network device and one terminal, the number and form of devices shown in FIG. 1 are only intended to illustrate, rather than to constitute limitations on the embodiments of the present disclosure. In actual applications, two or more network devices and two or more terminals can be included. The communication system shown in FIG. 1 is illustrated to include one network device 101 and one terminal 102.

It should be noted that the technical solutions of the embodiments of the present disclosure can be applied to various communication systems, for example, a long term evolution (LTE) system, a 5th generation (5G) mobile communication system, a 5G new radio (NR) system, or other future novel mobile communication systems.

The network device 101 in the embodiment of the present disclosure is an entity for transmitting or receiving signals at a network side. For example, the network device 101 can be an evolved NodeB (eNB), a transmission reception point (TRP), a next generation NodeB (gNB) in the NR system, a base station in other future mobile communication systems or an access point in a wireless fidelity (WiFi) system, etc. In the embodiments of the present disclosure, a specific technology and a specific device adopted by the network device are not limited. The network device provided in the embodiment of the present disclosure can be composed of a central unit (CU) and a distributed unit (DU), and the CU can also be referred to as a control unit, the protocol layer of the network side device, such as a base station, can be split by adopting a CU-DU structure, parts of functions of the protocol layer are centrally controlled by the CU, and parts or all of remaining functions of the protocol layer are distributed in the DU, and the DU is centrally controlled by the CU.

The terminal 102 in the embodiment of the present disclosure is an entity, such as a mobile phone, for receiving or transmitting signals. The terminal can also be referred to as a terminal, user equipment (UE), a mobile station (MS), a mobile terminal (MT), etc. The terminal can be a car with a communication function, a smart car, a mobile phone, a wearable device, a tablet computer (Pad), a computer with a radio transceiver function, a virtual reality (VR) terminal, an augmented reality (AR) terminal, a radio terminal in industrial control, a radio terminal in self-driving, a radio terminal in remote medical surgery, a radio terminal in a smart grid, a radio terminal in transportation safety, a radio terminal in a smart city, a radio terminal in a smart home, etc. In the embodiments of the present disclosure, a specific technology and a specific device form that are adopted by the terminal are not limited.

With continuous development of the wireless communication technology, satellite communication is considered an important aspect of future development of the wireless communication technology. In a scenario of the satellite communication, due to a long signal transmission distance between a sending end and a receiving end, there is a large delay in data transmission. For transmissions with an uplink and downlink relationship, the current standardization discussion has determined the introduction of a parameter, i.e., an offset *K*_{offset}, to compensate for the transmission delay. As shown in FIG. 1b and FIG. 1c, FIG. 1b is a schematic diagram of an uplink and downlink timing-aligned transmission mode on the network device side, and FIG. 1c is a schematic diagram of an uplink and downlink timing-unaligned transmission mode on the network device side.

The terminal can compensate for the transmission delay through ephemeris information and related information of common timing advance (common TA). The ephemeris information and the information of the common TA are notified to the terminal through system information.

In the scenario of the satellite communication, the terminal needs to obtain its own position information to compensate for uplink synchronization. When transmitting services with long transmission time, if global navigation satellite system (GNSS) information expires, the terminal needs to re-obtain the GNSS information.

For some terminals (such as Internet of Things (IoT) terminals), the wireless cellular network (cellular) module and the GNSS module may not be supported to work simultaneously. In the related art, only sporadic transmissions of the wireless cellular network and GNSS measurement are supported. When the terminal obtains the GNSS information, it may enter an idle state, thereby resulting in increased transmission delay and increased power consumption of the terminal.

It can be understood that the communication system described in the embodiment of the present disclosure is intended to describe the technical solutions in the embodiments of the present disclosure more clearly, rather than to constitute a limitation on the technical solutions provided in the embodiments of the present disclosure. It can be known by those of ordinary skill in the art that, with the evolution of a system architecture and the emergence of new service scenarios, the technical solutions provided in the embodiments of the present disclosure is equally applicable to similar technical problems.

The GNSS positioning measurement method and apparatus provided by the present disclosure will be introduced in detail below with reference to the accompanying drawings.

Referring to FIG. 2, FIG. 2 is a flowchart of a GNSS positioning measurement method according to an embodiment of the disclosure. The GNSS positioning measurement method of this embodiment may be performed by a terminal. The method can be executed independently or in conjunction with any other embodiments of the present disclosure. As shown in FIG. 2, the method may include the following steps.

At step 201, first indication information sent by a network device is received.

The first indication information is configured to indicate whether the terminal performs wireless communication interaction with the network device when performing positioning measurement. The terminal can determine, according to indication of the first indication information, whether it can perform the wireless communication interaction with the network device when performing the positioning measurement, that is, determine whether it can perform an operation of conducting the wireless communication interaction with the network device while performing the positioning measurement.

In some implementations, the first indication information is configured to indicate that the terminal performs the wireless communication interaction with the network device when performing the positioning measurement. The terminal monitors a control signaling sent by the network device while performing measurement.

In some implementations, the first indication information is configured to indicate that the terminal does not perform the wireless communication interaction with the network device when performing the positioning measurement. The terminal stops monitoring a control signaling sent by the network device while performing measurement.

In some implementations, the terminal may receive first positioning measurement configuration information sent by the network device. The first positioning measurement configuration information includes at least one of: a time domain position at which the positioning measurement is performed; a time length during which the positioning measurement is performed; or a trigger condition for performing the positioning measurement. The terminal can perform the positioning measurement according to configuration of the first positioning measurement configuration information.

Optionally, the trigger condition for performing the positioning measurement may include: a strength of a receiving signal of the terminal being less than a preset threshold, increased transmission interference between terminals, or expiration of the GNSS information, etc.

In some implementations, the terminal may send auxiliary information for positioning measurement configuration to the network device. The auxiliary information is used for the network device to determine the first positioning measurement configuration information and the first indication information. The network device can determine, according to the auxiliary information, the first positioning measurement configuration information and the first indication information sent to the terminal.

Optionally, the auxiliary information includes at least one of time information required by the terminal to perform the positioning measurement and movement speed information of the terminal.

In some implementations, the terminal may receive a plurality of pieces of candidate positioning measurement configuration information sent by the network device. The plurality of pieces of candidate positioning measurement configuration information include the first positioning measurement configuration information. The terminal may determine the first positioning measurement configuration information from the plurality of pieces of candidate positioning measurement configuration information.

As a possible implementation, the plurality of pieces of candidate positioning measurement configuration information may further include terminal status information. The terminal may determine the first positioning measurement configuration information from the plurality of pieces of candidate positioning measurement configuration information according to a correspondence between the terminal status information and positioning measurement configuration information. In other words, the terminal may determine the first positioning measurement configuration information corresponding to its own state from the plurality of pieces of candidate positioning measurement configuration information according to its own state.

Optionally, the status information may be movement speed range information. The terminal may determine a speed range within which a movement speed of the terminal is located according to its own movement speed, and determine the first positioning measurement configuration information from the plurality of pieces of candidate positioning measurement configuration information according to a correspondence between the movement speed range information and the positioning measurement configuration information.

As another possible implementation, the terminal may receive a control signaling sent by the network device, and determine the first positioning measurement configuration information from the plurality of pieces of candidate positioning measurement configuration information according to the control signaling.

Optionally, the control signaling may be a physical layer signaling, or may be a medium access control (MAC) control element (CE) or the like.

In some implementations, the terminal may send second indication information to the network device. The second indication information includes a terminal capability, and the terminal capability includes a capability of the terminal to perform the wireless communication interaction with the network device when performing the positioning measurement.

Optionally, there may be various terminal capabilities.

At step 202, the positioning measurement is performed according to the first indication information.

In the embodiments of the present disclosure, the terminal may perform the positioning measurement according to the first indication information. The terminal may determine, according to indication of the first indication information, whether it can perform the wireless communication interaction with the network device while performing the positioning measurement.

In some implementations, the first indication information is configured to indicate that the terminal performs the wireless communication interaction with the network device when performing the positioning measurement. The terminal monitors a control signaling sent by the network device while performing measurement.

In some implementations, the first indication information is configured to indicate that the terminal does not perform the wireless communication interaction with the network device when performing the positioning measurement. The terminal stops monitoring a control signaling sent by the network device while performing measurement.

In some implementations, the terminal may receive first positioning measurement configuration information sent by the network device. The first positioning measurement configuration information includes at least one of: a time domain position at which the positioning measurement is performed; a time length during which the positioning measurement is performed; or a trigger condition for performing the positioning measurement.

In some possible implementations, the first positioning measurement configuration information includes the time domain position at which the positioning measurement is performed. The terminal may perform the positioning measurement at the time domain position.

In some possible implementations, the first positioning measurement configuration information includes the time length during which the positioning measurement is performed. The terminal may perform the positioning measurement within the time length.

In some possible implementations, the first positioning measurement configuration information includes the time domain position at which the positioning measurement is performed and the trigger condition for performing the positioning measurement. The terminal may determine whether the trigger condition is satisfied, and perform the positioning measurement at the time domain position if the trigger condition is satisfied.

In some possible implementations, the first positioning measurement configuration information includes the time length during which the positioning measurement is performed and the trigger condition for performing the positioning measurement. The terminal may determine whether the trigger condition is satisfied, and perform the positioning measurement within the time length if the trigger condition is satisfied.

In some possible implementations, the first positioning measurement configuration information includes the time domain position at which the positioning measurement is performed, the time length during which the positioning measurement is performed and the trigger condition for performing the positioning measurement. The terminal may determine whether the trigger condition is satisfied, and perform the positioning measurement at the time domain position within the time length if the trigger condition is satisfied.

In summary, by receiving the first indication information sent by the network device, in which the first indication information is configured to indicate whether the terminal performs wireless communication interaction with the network device when performing positioning measurement, and performing the positioning measurement according to the first indication information, the terminal can obtain its own position information in a timely and effective manner, thereby effectively reducing the transmission delay and saving the power consumption of the terminal. Meanwhile, the terminal can obtain more accurate uplink synchronization compensation information, thereby avoiding interference in uplink transmissions between different terminals.

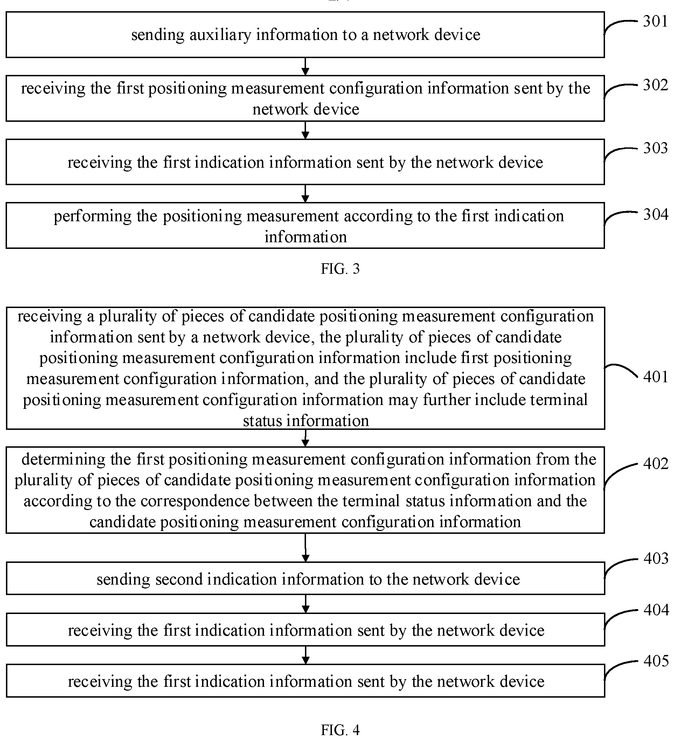

Referring to FIG. 3, FIG. 3 is a flowchart of a GNSS positioning measurement method according to an embodiment of the disclosure. The GNSS positioning measurement method of this embodiment may be performed by a terminal. The method can be executed independently or in conjunction with any other embodiments of the present disclosure. As shown in FIG. 3, the method may include the following steps.

At step 301, auxiliary information is sent to a network device.

In the embodiments, the terminal may send the auxiliary information to the network device. The auxiliary information is used for the network device to determine first positioning measurement configuration information and first indication information. In other words, the network device can determine, according to the auxiliary information, the first positioning measurement configuration information and the first indication information of the terminal.

The auxiliary information includes at least one of time information required by the terminal to perform the positioning measurement and movement speed information of the terminal.

The network device may determine the first positioning measurement configuration information and the first indication information of the terminal according to the time information required by the terminal to perform the positioning measurement and/or the movement speed information of the terminal.

As a possible implementation, the time information required by the terminal to perform the positioning measurement may be a time length for obtaining positioning information meeting requirements determined by the terminal based on its own capability or state, or may be an average time length for performing measurement during a time period, or may be a time length during which the positioning measurement is performed previously, or may be a time length specified by a protocol or configured by the network.

As a possible implementation, the movement speed information of the terminal may be a current instantaneous movement speed of the terminal, or may be an average movement speed of the terminal within a recent time period, etc.

It can be understood that the time information required by the terminal to perform the positioning measurement is related to the terminal capability, the movement speed information of the terminal is related to a current state of the terminal. The auxiliary information includes information related to the terminal capability and /or information related to the state, the network device can determine the positioning measurement configuration information corresponding to the terminal according to the information related to the terminal capability and /or the information related to the state included in the auxiliary information.

It can be understood that the time information required by the terminal to perform the positioning measurement corresponds to the terminal capability. The stronger the capability to perform the positioning measurement, the shorter the time required to perform the positioning measurement. Optionally, the terminal can directly report the time length for the terminal to perform the positioning measurement, or determine a capability level of performing the positioning measurement according to the time length for performing the positioning measurement, and report the capability level of performing the positioning measurement to the network device.

At step 302, the first positioning measurement configuration information sent by the network device is received.

In some implementations, the terminal may receive the first positioning measurement configuration information sent by the network device. The first positioning measurement configuration information includes at least one of: a time domain position at which the positioning measurement is performed; a time length during which the positioning measurement is performed; or a trigger condition for performing the positioning measurement. The terminal can perform the positioning measurement according to configuration of the first positioning measurement configuration information.

Optionally, the trigger condition for performing the positioning measurement may include: a strength of a receiving signal of the terminal being less than a preset threshold, increased transmission interference between terminals, or expiration of the GNSS information, etc.

In some implementations, the terminal may receive the first positioning measurement configuration information corresponding to the terminal sent by the network device, and performing the positioning measurement according to the first positioning measurement configuration information.

At step 303, the first indication information sent by the network device is received.

The first indication information is configured to indicate whether the terminal performs wireless communication interaction with the network device when performing positioning measurement. The terminal can determine, according to indication of the first indication information, whether it can perform the wireless communication interaction with the network device when performing the positioning measurement, that is, determine whether it can perform an operation of conducting the wireless communication interaction with the network device while performing the positioning measurement.

In some implementations, the first indication information may be determined based on the terminal capability. That is, the network device may determine the first indication information in the first positioning measurement configuration information corresponding to the terminal based on the terminal capability (for example, whether the wireless cellular network module and the positioning measurement module are supported to work simultaneously).

Optionally, the terminal may have various terminal capabilities. Different terminal capabilities correspond to different time required to perform the positioning measurement. That is, the terminal capabilities correspond to the time information required by the terminal to perform the positioning measurement included in the auxiliary information.

Optionally, the terminal can directly report the time length for the terminal to perform the positioning measurement, or the terminal can determine the capability level of performing the positioning measurement according to the time length during which the positioning measurement is performed and report the capability level of performing the positioning measurement to the network device.

As an example, the terminal capabilities may include: capability 1, indicating that the terminal does not support simultaneous operation of the wireless cellular network module and the positioning measurement module; capability 2 and capability 3, indicating that the terminal supports the simultaneous operation of the wireless cellular network module and the positioning measurement module. The time required for a terminal with capability 2 to perform the positioning measurement is less than the time required for a terminal with capability 3 to perform the positioning measurement, that is, the terminal with capability 2 has a stronger capability and the time required to perform measurement is shorter.

At step 304, the positioning measurement is performed according to the first indication information.

In the embodiments of the present disclosure, the terminal may perform the positioning measurement according to the first indication information. The terminal may determine, according to the indication of the first indication information, whether it can perform the wireless communication interaction with the network device while performing the positioning measurement.

In some implementations, the first indication information is configured to indicate that the terminal performs the wireless communication interaction with the network device when performing the positioning measurement. The terminal monitors a control signaling sent by the network device while performing measurement.

In some implementations, the first indication information is configured to indicate that the terminal does not perform the wireless communication interaction with the network device when performing the positioning measurement. The terminal stops monitoring a control signaling sent by the network device while performing measurement.

In some implementations, the terminal may receive the first positioning measurement configuration information sent by the network device. The first positioning measurement configuration information includes at least one of: a time domain position at which the positioning measurement is performed; a time length during which the positioning measurement is performed; or a trigger condition for performing the positioning measurement.

In some possible implementations, the first positioning measurement configuration information includes the time domain position at which the positioning measurement is performed. The terminal may perform the positioning measurement at the time domain position.

In some possible implementations, the first positioning measurement configuration information includes the time length during which the positioning measurement is performed. The terminal may perform the positioning measurement within the time length.

In some possible implementations, the first positioning measurement configuration information includes the time domain position at which the positioning measurement is performed and the trigger condition for performing the positioning measurement. The terminal may determine whether the trigger condition is satisfied, and perform the positioning measurement at the time domain position if the trigger condition is satisfied.

In some possible implementations, the first positioning measurement configuration information includes the time length during which the positioning measurement is performed and the trigger condition for performing the positioning measurement. The terminal may determine whether the trigger condition is satisfied, and perform the positioning measurement within the time length if the trigger condition is satisfied.

In some possible implementations, the first positioning measurement configuration information includes the time domain position at which the positioning measurement is performed, the time length during which the positioning measurement is performed and the trigger condition for performing the positioning measurement. The terminal may determine whether the trigger condition is satisfied, and perform the positioning measurement at the time domain position within the time length if the trigger condition is satisfied.

It can be understood that in the embodiment of the present disclosure, if the first indication information indicates that the terminal cannot perform the wireless communication interaction with the network device when performing the positioning measurement, the network device may not perform the wireless communication interaction with the terminal during the positioning measurement performed by the terminal, and does not perform uplink and downlink dynamic data scheduling or uplink and downlink configuration data scheduling for the terminal, which can reduce overhead and improve system communication efficiency.

In summary, by sending the auxiliary information to the network device, receiving the first positioning measurement configuration information sent by the network device, receiving the first indication information sent by the network device, in which the first indication information is configured to indicate whether the terminal performs wireless communication interaction with the network device when performing positioning measurement, and performing the positioning measurement according to the first indication information, the terminal can obtain its own position information in a timely and effective manner, thereby effectively reducing the transmission delay and saving the power consumption of the terminal. Meanwhile, the terminal can obtain more accurate uplink synchronization compensation information, thereby avoiding interference in uplink transmissions between different terminals.

Referring to FIG. 4, FIG. 4 is a flowchart of a GNSS positioning measurement method according to an embodiment of the disclosure. The GNSS positioning measurement method of this embodiment may be performed by a terminal. The method can be executed independently or in conjunction with any other embodiments of the present disclosure. As shown in FIG. 4, the method may include the following steps.

At step 401, a plurality of pieces of candidate positioning measurement configuration information sent by a network device are received. The plurality of pieces of candidate positioning measurement configuration information include first positioning measurement configuration information. The plurality of pieces of candidate positioning measurement configuration information may further include terminal status information.

In some implementations, the terminal may receive the plurality of pieces of candidate positioning measurement configuration information sent by the network device. The plurality of pieces of candidate positioning measurement configuration information include the first positioning measurement configuration information. The plurality of pieces of candidate positioning measurement configuration information may further include terminal status information.

The terminal may obtain the plurality of pieces of candidate positioning measurement configuration information, and obtain a correspondence between the terminal status information and the plurality of pieces of candidate positioning measurement configuration information.

In some implementations, the status information may be movement speed range information.

The terminal may obtain the movement speed range information corresponding to the plurality of pieces of candidate positioning measurement configuration information. The terminal may determine a speed range within which a movement speed of the terminal is located according to its own movement speed, and determine the first positioning measurement configuration information from the plurality of pieces of candidate positioning measurement configuration information according to a correspondence between the movement speed range information and the positioning measurement configuration information.

As an example, the correspondence between the status information and the positioning measurement configuration information is shown in the following table.

| status information | positioning measurement configuration information |
|---|---|
| movement speed range 1 | candidate positioning measurement configuration information 1 |
| movement speed range 2 | candidate positioning measurement configuration information 2 |
| ...... | ...... |
| movement speed range N | candidate positioning measurement configuration information N |

At step 402, the first positioning measurement configuration information is determined from the plurality of pieces of candidate positioning measurement configuration information according to the correspondence between the terminal status information and the candidate positioning measurement configuration information.

In the embodiments, the terminal may obtain the plurality of pieces of candidate positioning measurement configuration information, and the plurality of pieces of candidate positioning measurement configuration information include the terminal status information. The terminal may determine the first positioning measurement configuration information from the plurality of pieces of candidate positioning measurement configuration information according to the correspondence between the terminal status information and the positioning measurement configuration information. In other words, the terminal may determine the first positioning measurement configuration information corresponding to its own state from the plurality of pieces of candidate positioning measurement configuration information according to its own state.

In some implementations, the status information may be movement speed range information. The terminal may determine a speed range within which a movement speed of the terminal is located according to its own movement speed, and determine the first positioning measurement configuration information from the plurality of pieces of candidate positioning measurement configuration information according to a correspondence between the movement speed range information and the positioning measurement configuration information.

It can be understood that the first positioning measurement configuration information corresponds to and is suitable to the state of the terminal.

As a possible implementation, the movement speed of the terminal may be a current instantaneous movement speed of the terminal, or may be an average movement speed of the terminal within a recent time period, etc.

At step 403, second indication information is sent to the network device.

The second indication information may include a terminal capability, the terminal capability includes a capability of the terminal to perform the wireless communication interaction with the network device when performing the positioning measurement.

Optionally, there may be various terminal capabilities. Different terminal capabilities correspond to different time required to perform the positioning measurement. That is, the terminal capabilities correspond to the time information required by the terminal to perform the positioning measurement included in the auxiliary information.

As an example, the terminal capabilities may include: capability 1, indicating that the terminal does not support simultaneous operation of the wireless cellular network module and the positioning measurement module; capability 2 and capability 3, indicating that the terminal supports the simultaneous operation of the wireless cellular network module and the positioning measurement module. The time required for a terminal with capability 2 to perform the positioning measurement is less than the time required for a terminal with capability 3 to perform the positioning measurement, that is, the terminal with capability 2 has a stronger capability and the time required to perform measurement is shorter.

It can be understood that the network device can determine, according to indication of the second indication information, whether the terminal can perform the wireless communication interaction with the network device when performing the positioning measurement. If the second indication information indicates that the terminal cannot perform the wireless communication interaction with the network device when performing the positioning measurement, then during the positioning measurement performed by the terminal, the network device cannot perform the wireless communication interaction with the terminal, and does not perform uplink and downlink dynamic data scheduling or uplink and downlink configuration data scheduling for the terminal, which can reduce overhead and improve system communication efficiency.

At step 404, first indication information sent by the network device is received.

The first indication information is configured to indicate whether the terminal performs the wireless communication interaction with the network device when performing the positioning measurement. The terminal can determine, according to indication of the first indication information, whether it can perform the wireless communication interaction with the network device when performing the positioning measurement, that is, determine whether it can perform an operation of conducting the wireless communication interaction with the network device while performing the positioning measurement.

At step 405, the positioning measurement is performed according to the first indication information.

In the embodiments of the present disclosure, the terminal may perform the positioning measurement according to the first indication information. The terminal may determine, according to the indication of the first indication information, whether it can perform the wireless communication interaction with the network device while performing the positioning measurement.

In some implementations, the first indication information is configured to indicate that the terminal performs the wireless communication interaction with the network device when performing the positioning measurement. The terminal monitors a control signaling sent by the network device while performing measurement.

In some implementations, the first indication information is configured to indicate that the terminal does not perform the wireless communication interaction with the network device when performing the positioning measurement. The terminal stops monitoring a control signaling sent by the network device while performing measurement.

In some implementations, the terminal may receive the first positioning measurement configuration information sent by the network device. The first positioning measurement configuration information includes at least one of: a time domain position at which the positioning measurement is performed; a time length during which the positioning measurement is performed; or a trigger condition for performing the positioning measurement.

In some possible implementations, the first positioning measurement configuration information includes the time domain position at which the positioning measurement is performed. The terminal may perform the positioning measurement at the time domain position.

In some possible implementations, the first positioning measurement configuration information includes the time length during which the positioning measurement is performed. The terminal may perform the positioning measurement within the time length.

In some possible implementations, the first positioning measurement configuration information includes the time domain position at which the positioning measurement is performed and the trigger condition for performing the positioning measurement. The terminal may determine whether the trigger condition is satisfied, and perform the positioning measurement at the time domain position if the trigger condition is satisfied.

In some possible implementations, the first positioning measurement configuration information includes the time length during which the positioning measurement is performed and the trigger condition for performing the positioning measurement. The terminal may determine whether the trigger condition is satisfied, and perform the positioning measurement within the time length if the trigger condition is satisfied.

In some possible implementations, the first positioning measurement configuration information includes the time domain position at which the positioning measurement is performed, the time length during which the positioning measurement is performed and the trigger condition for performing the positioning measurement. The terminal may determine whether the trigger condition is satisfied, and perform the positioning measurement at the time domain position within the time length if the trigger condition is satisfied.

It can be understood that in the embodiment of the present disclosure, if the first indication information indicates that the terminal cannot perform the wireless communication interaction with the network device when performing the positioning measurement, the network device may not perform the wireless communication interaction with the terminal during the positioning measurement performed by the terminal, and does not perform uplink and downlink dynamic data scheduling or uplink and downlink configuration data scheduling for the terminal, which can reduce overhead and improve system communication efficiency.

In summary, by receiving the plurality of pieces of candidate positioning measurement configuration information including the first positioning measurement configuration information and the terminal status information sent by the network device, determining the first positioning measurement configuration information from the plurality of pieces of candidate positioning measurement configuration information according to the correspondence between the terminal status information and the candidate positioning measurement configuration information, sending the second indication information to the network device, receiving the first indication information sent by the network device, and performing the positioning measurement according to the first indication information, the terminal can obtain its own position information in a timely and effective manner, thereby effectively reducing the transmission delay and saving the power consumption of the terminal. Meanwhile, the terminal can obtain more accurate uplink synchronization compensation information, thereby avoiding interference in uplink transmissions between different terminals.

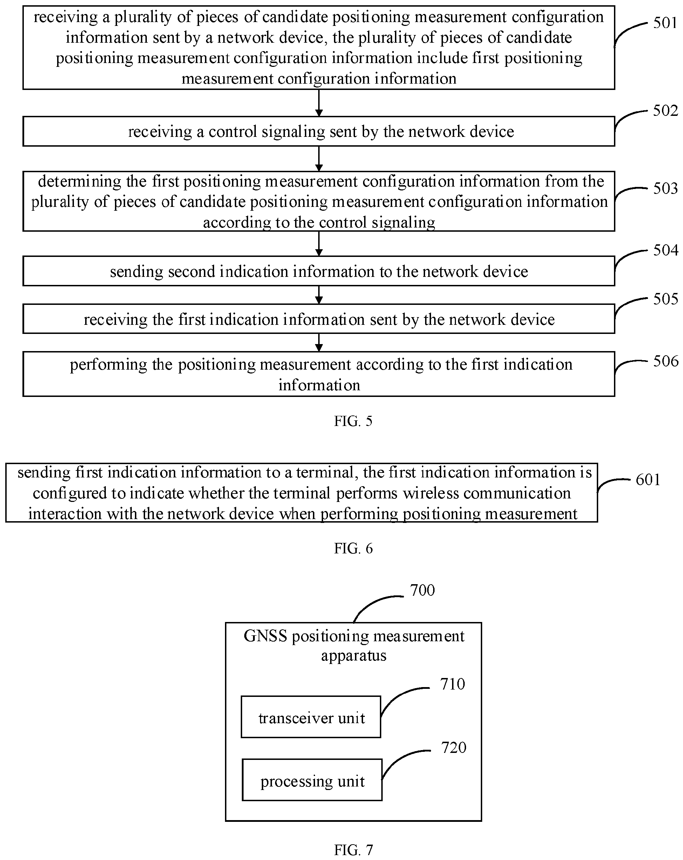

Referring to FIG. 5, FIG. 5 is a flowchart of a GNSS positioning measurement method according to an embodiment of the disclosure. The GNSS positioning measurement method of this embodiment may be performed by a terminal. The method can be executed independently or in conjunction with any other embodiments of the present disclosure. As shown in FIG. 5, the method may include the following steps.

At step 501, a plurality of pieces of candidate positioning measurement configuration information sent by a network device are received. The plurality of pieces of candidate positioning measurement configuration information include first positioning measurement configuration information.

In the embodiments of the present disclosure, the terminal may receive the plurality of pieces of candidate positioning measurement configuration information sent by the network device. The plurality of pieces of candidate positioning measurement configuration information include the first positioning measurement configuration information.

In the embodiments of the present disclosure, the terminal may obtain the plurality of pieces of candidate positioning measurement configuration information informed by the network device.

At step 502, a control signaling sent by the network device is received.

In the embodiments of the present disclosure, the terminal may receive the control signaling sent by the network device, and determine the first positioning measurement configuration information from the plurality of pieces of candidate positioning measurement configuration information according to indication of the control signaling.

In some implementations, the control singling may be determined by the network device based on a terminal capability of the terminal and/or a state of the terminal. The control signaling can indicate the first positioning measurement configuration information of the terminal.

At step 503, the first positioning measurement configuration information is determined from the plurality of pieces of candidate positioning measurement configuration information according to the control signaling.

In the embodiments, the terminal may determine the first positioning measurement configuration information from the obtained plurality of pieces of candidate positioning measurement configuration information according to the indication of the received control signaling sent by the network device.

At step 504, second indication information is sent to the network device.

At step 505, first indication information sent by the network device is received.

At step 506, the positioning measurement is performed according to the first indication information.

In this embodiment of the present disclosure, steps 504-506 can be implemented in any manner among various embodiments of the present disclosure, which is not limited in the embodiment of the present disclosure and will not be described again.

In summary, by receiving the plurality of pieces of candidate positioning measurement configuration information including the first positioning measurement configuration information sent by the network device, receiving the control signaling sent by the network device, determining the first positioning measurement configuration information from the plurality of pieces of candidate positioning measurement configuration information according to the control signaling, sending the second indication information to the network device, receiving the first indication information sent by the network device, and performing the positioning measurement according to the first indication information, the terminal can obtain its own position information in a timely and effective manner, thereby effectively reducing the transmission delay and saving the power consumption of the terminal. Meanwhile, the terminal can obtain more accurate uplink synchronization compensation information, thereby avoiding interference in uplink transmissions between different terminals.

Referring to FIG. 6, FIG. 6 is a flowchart of a GNSS positioning measurement method according to an embodiment of the disclosure. The GNSS positioning measurement method of this embodiment may be performed by a network device. The method can be executed independently or in conjunction with any other embodiments of the present disclosure. As shown in FIG. 6, the method may include the following steps.

At step 601, first indication information is sent to a terminal. The first indication information is configured to indicate whether the terminal performs wireless communication interaction with the network device when performing positioning measurement.

In some implementations, the first indication information is configured to indicate that the terminal performs the wireless communication interaction with the network device when performing the positioning measurement. In detail, the first indication information is configured to instruct the terminal to monitor a control signaling sent by the network device. That is, the terminal monitors the control signaling sent by the network device while performing measurement according to indication of the first indication information.

In some implementations, the first indication information is configured to indicate that the terminal does not perform the wireless communication interaction with the network device when performing the positioning measurement. In detail, the first indication information is configured to instruct the terminal to stop monitoring a control signaling sent by the network device. That is, the terminal stops monitoring the control signaling sent by the network device while performing measurement according to indication of the first indication information.

It can be understood that in the embodiment of the present disclosure, if the first indication information indicates that the terminal cannot perform the wireless communication interaction with the network device when performing the positioning measurement, the network device may not perform the wireless communication interaction with the terminal during the positioning measurement performed by the terminal, and does not perform uplink and downlink dynamic data scheduling or uplink and downlink configuration data scheduling for the terminal, which can reduce overhead and improve system communication efficiency.

In some implementations, the network device may send first positioning measurement configuration information to the terminal. The first positioning measurement configuration information includes at least one of: a time domain position at which the positioning measurement is performed; a time length during which the positioning measurement is performed; or a trigger condition for performing the positioning measurement.

In some possible implementations, the first positioning measurement configuration information includes the time domain position at which the positioning measurement is performed. The terminal may perform the positioning measurement at the time domain position.

In some possible implementations, the first positioning measurement configuration information includes the time length during which the positioning measurement is performed. The terminal may perform the positioning measurement within the time length.

In some possible implementations, the first positioning measurement configuration information includes the time domain position at which the positioning measurement is performed and the trigger condition for performing the positioning measurement. The terminal may determine whether the trigger condition is satisfied, and perform the positioning measurement at the time domain position if the trigger condition is satisfied.

In some possible implementations, the first positioning measurement configuration information includes the time length during which the positioning measurement is performed and the trigger condition for performing the positioning measurement. The terminal may determine whether the trigger condition is satisfied, and perform the positioning measurement within the time length if the trigger condition is satisfied.

In some possible implementations, the first positioning measurement configuration information includes the time domain position at which the positioning measurement is performed, the time length during which the positioning measurement is performed and the trigger condition for performing the positioning measurement. The terminal may determine whether the trigger condition is satisfied, and perform the positioning measurement at the time domain position within the time length if the trigger condition is satisfied.

In some implementations, the network device may receive auxiliary information sent by the terminal. The auxiliary information includes at least one of time information required by the terminal to perform the positioning measurement and movement speed information of the terminal. The network device can determine, according to the auxiliary information, the first positioning measurement configuration information and the first indication information sent to the terminal.

It can be understood that the time information required by the terminal to perform the positioning measurement corresponds to a terminal capability of the terminal. The stronger the capability to perform the positioning measurement, the shorter the time required to perform the positioning measurement. Optionally, the terminal can directly report the time length for the terminal to perform the positioning measurement, or determine a capability level of performing the positioning measurement based on the time length for performing the positioning measurement, and report the capability level of performing the positioning measurement to the network device.

In some implementations, the network device may send a plurality of pieces of candidate positioning measurement configuration information to the terminal. The plurality of pieces of candidate positioning measurement configuration information include the first positioning measurement configuration information. The terminal may determine the first positioning measurement configuration information from the plurality of pieces of candidate positioning measurement configuration information.

As a possible implementation, the plurality of pieces of candidate positioning measurement configuration information may further include terminal status information. The terminal may determine the first positioning measurement configuration information from the plurality of pieces of candidate positioning measurement configuration information according to a correspondence between the terminal status information and positioning measurement configuration information.

Optionally, the status information may be movement speed range information. The terminal may determine a speed range within which a movement speed of the terminal is located, and determine the first positioning measurement configuration information from the plurality of pieces of candidate positioning measurement configuration information according to a correspondence between the movement speed range information and the positioning measurement configuration information.

As another possible implementation, the network device may send a control signaling to the terminal. The control signaling is used for instructing the terminal to determine the first positioning measurement configuration information from the plurality of pieces of candidate positioning measurement configuration information.

In some implementations, the network device may receive second indication information sent by the terminal. The second indication information includes a terminal capability, and the terminal capability includes a capability of the terminal to perform the wireless communication interaction with the network device when performing the positioning measurement.

Optionally, the terminal may have various terminal capabilities. Different terminal capabilities correspond to different time required to perform the positioning measurement. That is, the terminal capabilities correspond to the time information required by the terminal to perform the positioning measurement included in the auxiliary information.

As an example, the terminal capabilities may include: capability 1, indicating that the terminal does not support simultaneous operation of the wireless cellular network module and the positioning measurement module; capability 2 and capability 3, indicating that the terminal supports the simultaneous operation of the wireless cellular network module and the positioning measurement module. The time required for a terminal with capability 2 to perform the positioning measurement is less than the time required for a terminal with capability 3 to perform the positioning measurement, that is, the terminal with capability 2 has a stronger capability and the time required to perform measurement is shorter.

It can be understood that the network device can determine, according to indication of the second indication information, whether the terminal can perform the wireless communication interaction with the network device when performing the positioning measurement. If the second indication information indicates that the terminal cannot perform the wireless communication interaction with the network device when performing the positioning measurement, then during the positioning measurement performed by the terminal, the network device cannot perform the wireless communication interaction with the terminal, and does not perform uplink and downlink dynamic data scheduling or uplink and downlink configuration data scheduling for the terminal, which can reduce overhead and improve system communication efficiency.

In summary, by sending the first indication information to the terminal, in which the first indication information is configured to indicate whether the terminal performs wireless communication interaction with the network device when performing positioning measurement, the terminal can obtain its own position information in a timely and effective manner, thereby effectively reducing the transmission delay and saving the power consumption of the terminal. Meanwhile, uplink synchronization compensation information can be obtained, thereby avoiding interference in uplink transmissions between different terminals.

Corresponding to the GNSS positioning measurement methods provided by the above embodiments of the present disclosure, the embodiments of the present disclosure further provide GNSS positioning measurement apparatuses. Since the GNSS positioning measurement apparatuses provided by the embodiments of the present disclosure correspond to the methods provided by the above embodiments, the implementations of the GNSS positioning measurement method are also applicable to the GNSS positioning measurement apparatuses provided in the following embodiments, which will not be detailed in the following embodiments.

Referring to FIG. 7, FIG. 7 is a block diagram of a GNSS positioning measurement apparatus according to an embodiment of the disclosure.

As shown in FIG. 7, the GNSS positioning measurement apparatus 700 includes a transceiver unit 710 and a processing unit 720.

The transceiver unit 710 is configured to receive first indication information sent by a network device, in which the first indication information is configured to indicate whether a terminal performs wireless communication interaction with the network device when performing positioning measurement.

The processing unit 720 is configured to perform the positioning measurement according to the first indication information.

Optionally, the first indication information is configured to indicate that the terminal performs the wireless communication interaction with the network device when performing the positioning measurement. The transceiver unit 710 is further configured to monitor a control signaling sent by the network device.

Optionally, the first indication information is configured to indicate that the terminal does not perform the wireless communication interaction with the network device when performing the positioning measurement. The transceiver unit 710 is further configured to stop monitoring a control signaling sent by the network device.

Optionally, the transceiver unit 710 is further configured to: receive first positioning measurement configuration information sent by the network device, in which the first positioning measurement configuration information comprises at least one of: a time domain position at which the positioning measurement is performed; a time length during which the positioning measurement is performed; or a trigger condition for performing the positioning measurement.

Optionally, the transceiver unit 710 is further configured to: send auxiliary information to the network device, in which the auxiliary information comprises at least one of time information required by the terminal to perform the positioning measurement and movement speed information of the terminal.

Optionally, the transceiver unit 710 is further configured to: receive a plurality of pieces of candidate positioning measurement configuration information sent by the network device, in which the plurality of pieces of candidate positioning measurement configuration information comprise the first positioning measurement configuration information; and determine the first positioning measurement configuration information from the plurality of pieces of candidate positioning measurement configuration information.

Optionally, transceiver unit 710 is further configured to: determine the first positioning measurement configuration information from the plurality of pieces of candidate positioning measurement configuration information according to a correspondence between terminal status information and candidate positioning measurement configuration information; in which the plurality of pieces of candidate positioning measurement configuration information comprise the terminal status information.

Optionally, transceiver unit 710 is further configured to: receive a control signaling sent by the network device; and determine the first positioning measurement configuration information from the plurality of pieces of candidate positioning measurement configuration information according to the control signaling.

Optionally, the transceiver unit 710 is further configured to: send second indication information to the network device, wherein the second indication information comprises a terminal capability, and the terminal capability comprises a capability of the terminal to perform the wireless communication interaction with the network device when performing the positioning measurement.

With the GNSS positioning measurement apparatus provided in the embodiments of the present disclosure, by receiving the first indication information sent by the network device, in which the first indication information is configured to indicate whether the terminal performs wireless communication interaction with the network device when performing positioning measurement, and performing the positioning measurement according to the first indication information, the terminal can obtain its own position information in a timely and effective manner, thereby effectively reducing the transmission delay and saving the power consumption of the terminal. Meanwhile, the terminal can obtain more accurate uplink synchronization compensation information, thereby avoiding interference in uplink transmissions between different terminals.

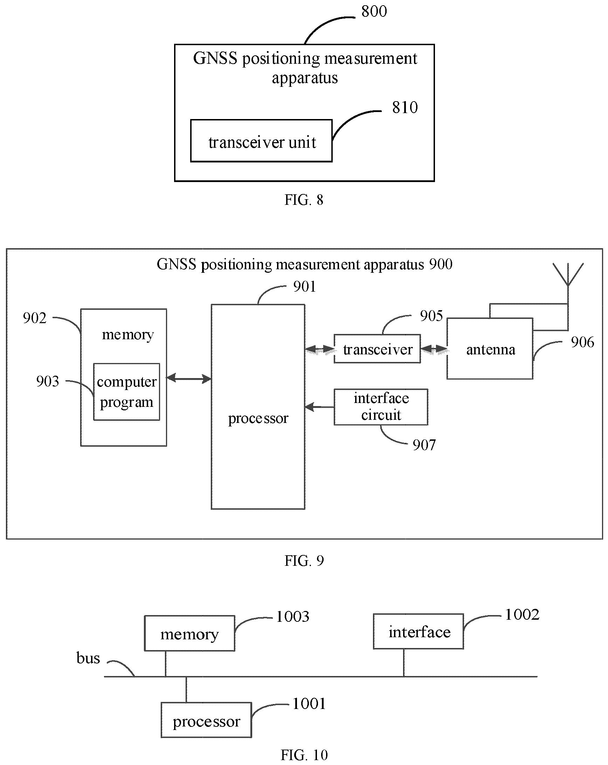

Referring to FIG. 8, FIG. 8 is a block diagram of a GNSS positioning measurement apparatus according to an embodiment of the disclosure.

As shown in FIG. 8, the GNSS positioning measurement apparatus 800 includes a transceiver unit 810.

The transceiver unit 810 is configured to send first indication information to a terminal, in which the first indication information is configured to indicate whether the terminal performs wireless communication interaction with a network device when performing positioning measurement.

Optionally, the transceiver unit 810 is further configured to: send first measurement configuration information to the terminal, in which the first positioning measurement configuration information comprises at least one of: a time domain position at which the positioning measurement is performed; a time length during which the positioning measurement is performed; or a trigger condition for performing the positioning measurement.

Optionally, the transceiver unit 810 is further configured to: receive auxiliary information sent by the terminal, in which the auxiliary information comprises at least one of time information required by the terminal to perform the positioning measurement and movement speed information of the terminal.

Optionally, the transceiver unit 810 is further configured to: send a plurality of pieces of candidate positioning measurement configuration information to the terminal, in which the plurality of pieces of candidate positioning measurement configuration information comprise the first positioning measurement configuration information.

Optionally, the plurality of pieces of candidate positioning measurement configuration information comprise terminal status information; a correspondence between the terminal status information and positioning measurement configuration information is used for the terminal to determine the first positioning measurement configuration information from the plurality of pieces of candidate positioning measurement configuration information.

Optionally, the transceiver unit 810 is further configured to: send a control signaling to the terminal; in which the control signaling is configured to instruct the terminal to determine the first positioning measurement configuration information from the plurality of pieces of candidate positioning measurement configuration information.

Optionally, the transceiver unit 810 is further configured to: receive second indication information sent by the terminal, in which the second indication information comprises a terminal capability, and the terminal capability comprises a capability of the terminal to perform the wireless communication interaction with the network device when performing the positioning measurement.

With the GNSS positioning measurement apparatus provided in the embodiments of the present disclosure, by sending the first indication information to the terminal, in which the first indication information is configured to indicate whether the terminal performs wireless communication interaction with the network device when performing positioning measurement, the terminal can obtain its own position information in a timely and effective manner, thereby effectively reducing the transmission delay and saving the power consumption of the terminal. Meanwhile, more accurate uplink synchronization compensation information can be obtained, thereby avoiding interference in uplink transmissions between different terminals.

In order to implement the above embodiments, the embodiments of the present disclosure also provide a communication apparatus, including: a processor and a memory. Computer programs are stored in the memory. The processor executes the computer programs stored in the memory, so that the communication apparatus executes the steps of the methods shown in FIG. 2 to FIG. 5.

In order to implement the above embodiments, the embodiments of the present disclosure also provide a communication apparatus, including: a processor and a memory. Computer programs are stored in the memory. The processor executes the computer programs stored in the memory, so that the communication apparatus executes the steps of the method shown in FIG. 6.

In order to implement the above embodiments, the embodiments of the present disclosure also provide a communication apparatus, including: a processor and an interface circuit. The interface circuit is configured to receive code instructions and transmit the code instructions to the processor. The processor executes the computer programs stored in the memory, so that the communication apparatus is configured to run the code instructions to perform the steps of the methods shown in FIG. 2 to FIG. 5.

In order to implement the above embodiments, the embodiments of the present disclosure also provide a communication apparatus, including: a processor and an interface circuit. The interface circuit is configured to receive code instructions and transmit the code instructions to the processor. The processor executes the computer programs stored in the memory, so that the communication apparatus is configured to run the code instructions to perform the steps of the method shown in FIG. 6.

Referring to FIG. 9, FIG. 9 is a block diagram of a communication apparatus according to an embodiment of the disclosure. The GNSS positioning measurement apparatus 900 can be a network device, or a terminal, or a chip, a chip system, a processor, etc. that supports the network device to implement the method, or a chip, a chip system, a processor, etc. that supports the terminal to implement the method. The apparatus is configured to implement the method in the above method embodiments. For details, please refer to the descriptions in the above method embodiments.

The GNSS positioning measurement apparatus 900 may include one or more processors 901. The processor 901 can be a general-purpose processor or a special-purpose processor. For example, it may be a baseband processor or a central processing unit. The baseband processor is configured to process communication protocols and communication data, and the central processor is configured to control the communication apparatus (such as base station, baseband chip, terminal, terminal chip, DU or CU, etc.) to execute computer programs and process computer program data.

Optionally, the GNSS positioning measurement apparatus 900 may also include one or more memories 902 on each of which a computer program 903 is stored. When the computer program 903 is executed by the processor 901, the GNSS positioning measurement apparatus 900 is caused to perform the method in the above method embodiments. The computer program 903 may be solidified in the processor 901, in which case the processor 901 may be implemented by hardware.

Optionally, the memory 902 may also store data. The GNSS positioning measurement apparatus 900 and the memory 902 can be set separately or integrated together.

Optionally, the GNSS positioning measurement apparatus 900 may include a transceiver 905 and an antenna 906. The transceiver 905 can be called a transceiver unit, a transceiver machine, or a transceiver circuit, etc., to implement the transceiving function. The transceiver 905 may include a receiver and a transmitter. The receiver can be called a receiver or a receiving circuit, etc., for realizing the receiving function; and the transmitter can be called a transmitter or a transmitting circuit, etc., to implement the transmitting function.

Optionally, the GNSS positioning measurement apparatus 900 may further include one or more interface circuits 907. The interface circuit 907 is configured to receive a code instruction and transmit the code instruction to the processor 901. The code instruction is running on the processor 901, the GNSS positioning measurement apparatus 900 is caused to implement the method in the above embodiments.

In an implementation, the processor 901 may include a transceiver for implementing the receiving and transmitting function. For example, the transceiver can be a transceiver circuit, or an interface, or an interface circuit. The transceiver circuits, interfaces, or interface circuits configured to perform the receiving and transmitting function may be separate or integrated together. The transceiver circuit, interface or interface circuit may be configured to read and write code/data, or the transceiver circuit, interface or interface circuit may be configured to transmit signals.

**In** an embodiment, the GNSS positioning measurement apparatus 900 may include a circuit that can implement the transmitting or receiving or communicating function in the above method embodiments. The processors and transceivers in the disclosure can be implemented in an integrated circuit (IC), an analog IC, a radio frequency integrated circuit (RFIC), a mixed-signal IC, an application specific integrated circuit (ASIC), a printed circuit board (PCB), an electronic equipment, etc. The processor and transceiver can also be manufactured with various IC process technologies, such as a complementary metal oxide semiconductor (CMOS), nMetal-oxide-semiconductor (NMOS), a positive channel metal oxide semiconductor (PMOS), bipolar junction transistor (BJT), a bipolar CMOS (BiCMOS), silicon germanium (SiGe), gallium arsenide (GaAs), etc.

The GNSS positioning measurement apparatus in the above embodiments can be a network device or a terminal, but the scope of the GNSS positioning measurement apparatus in the disclosure is not limited to this, and the structure of the GNSS positioning measurement apparatus may not be restricted in FIG. 7-FIG. 8. The GNSS positioning measurement apparatus can be an independent device or part of a larger device. For example, the GNSS positioning measurement apparatus can be:
(1) an independent IC, or a chip, or a chip system or a subsystem;
(2)a collection including one or more IC, optionally, the IC collection may also include storage components for storing data and computer programs;
(3)an ASIC, such as a modem;
(4) modules embedded in other devices;
(5)a receiver, a terminal, an intelligent terminal, a cellular phone, a wireless device, a handheld phone, a mobile unit, a vehicle-mounted device, a network device, a cloud device, an artificial intelligence device, etc.;
(6) others.

For the case where the GNSS positioning measurement apparatus can be a chip or a chip system, with reference to the structural diagram of the chip in FIG. 10. The chip shown in FIG. 10 includes the processor 1001 and the interface 1002. There may be one or more processors 1001, and there may be a plurality of interfaces 1002.

For the case where the chip is configured to implement the functions of the network device in the embodiments of the present disclosure, the interface 1002 is configured to receive code instructions and transmit the code instructions to the processor, and the processor 1001 is configured to run the code instructions to execute the methods of FIG. 2-FIG. 5.

For the case where the chip is configured to implement the functions of the terminal in the embodiments of the present disclosure, the interface 1002 is configured to receive code instructions and transmit the code instructions to the processor, and the processor 1001 is configured to run the code instructions to execute the method of FIG. 6.

Optionally, the chip also includes a memory 1003, which is configured to store necessary computer programs and data.

Those skilled in the art may also understand that the various illustrative logical blocks and steps listed in the embodiments of the disclosure may be implemented by electronic hardware, computer software, or their combination. Whether such a function is implemented in hardware or software depends on specific applications and design requirements of the overall system. Those skilled in the art may, for each specific application, use a variety of methods to achieve the above function, but such implementation shall not be regarded as going beyond the scope of the protection of the embodiments of the disclosure.

The disclosure also provides a communication system. The communication system includes the GNSS positioning measurement apparatus used as the terminal, and the GNSS positioning measurement apparatus used as the network device in the embodiments of FIG. 7-FIG. 8. Or the communication system includes the GNSS positioning measurement apparatus used as the terminal, and the GNSS positioning measurement apparatus used as the network device in the embodiment of FIG. 9.

The disclosure also provides a computer-readable storage medium on which instructions are stored. When the instruction is executed by a computer, the function of any of the above method embodiments is implemented.

The disclosure also provides a computer program product. When the computer program product is executed by a computer, the functions of any of the above method embodiments is implemented.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium media be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in the present disclosure are distinguished merely for convenience of description, and are not intended to limit the scope of embodiments of the disclosure, but also to indicate an order of precedence.

At least one in the present disclosure may also be described as one or more, and a plurality of may be two, three, four or more, which is not limited in the present disclosure. In embodiments of the present disclosure, for a kind of technical feature, technical features in the kind of technical feature are distinguished by "first", "second", "third", "A", "B", "C" and "D", and there is no order of precedence or magnitude between technical features described in "first", "second", "third", "A", "B", "C" and "D".

The corresponding relationships shown in each table in the present disclosure can be configured or predefined. The values of the information in each table are only examples and can be configured as other values, which is not limited by the present disclosure. When the correspondence between information and each parameter is configured, it is not necessarily required to configure all the correspondences shown in each table. For example, in the table in the present disclosure, the correspondences shown in some rows may not be configured. For another example, appropriate form adjustments can be made based on the above table, such as splitting, merging, etc. The names of the parameters shown in the titles of the above tables may also be other names understandable by the communication device, and the values or expressions of the parameters may also be other values or expressions understandable by the communication device. When implementing the above tables, other data structures can also be used, such as array, queue, container, stack, linear list, pointer, linked list, tree, graph, structure, class, heap, distributed table or hash table.

The term "predefined" in the present disclosure may be understood as defined, pre-defined, stored, pre-stored, pre-negotiated, pre-configured, solidified, or pre-burnt.

Those of ordinary skill in the art will appreciate that the units and algorithm steps of each example described in conjunction with the embodiments disclosed herein can be implemented with electronic hardware, or a combination of computer software and electronic hardware. Whether these functions are performed in hardware or software depends on the specific application and design constraints of the technical solutions. Those of ordinary skill in the art may implement the described functions using different methods for each specific application, but such implementations should not be considered as exceeding the scope of the present disclosure.

Those of ordinary skill in the art can clearly understand that for the convenience and simplicity of description, reference may be made to the corresponding processes in the above method embodiments for the specific operating processes of the systems, devices and units described above, which will not be further described herein.

It should be understood that the various forms of processes shown above may be used, with steps reordered, added or deleted. For example, each step described in the embodiments of the present disclosure can be executed in parallel, sequentially, or in a different order. As long as the desired results of the technical solution disclosed in the present disclosure can be achieved, there is no limitation here.

The above descriptions are only specific embodiments of the present disclosure, but the protection scope of the present disclosure is not limited thereto. Any technician familiar with the technical field can easily think of changes or substitutions within the technical scope of in the present disclosure, all of which shall fall within the protection scope of the present disclosure. Therefore, the protection scope of the present disclosure is defined by the protection scope of the claims.

## Claims

1. A global navigation satellite system (GNSS) positioning measurement method, performed by a terminal, comprising:
receiving first indication information sent by a network device, wherein the first indication information is configured to indicate whether the terminal performs wireless communication interaction with the network device when performing positioning measurement; and
performing the positioning measurement according to the first indication information.

2. The method according to claim **1,** wherein the first indication information is configured to indicate that the terminal performs the wireless communication interaction with the network device when performing the positioning measurement, and the method further comprises:
monitoring a control signaling sent by the network device.

3. The method according to claim 1, wherein the first indication information is configured to indicate that the terminal does not perform the wireless communication interaction with the network device when performing the positioning measurement, and the method further comprises:
stopping monitoring a control signaling sent by the network device.

4. The method according to claim **1,** further comprising:
receiving first positioning measurement configuration information sent by the network device, wherein the first positioning measurement configuration information comprises at least one of:
a time domain position at which the positioning measurement is performed;
a time length during which the positioning measurement is performed; or
a trigger condition for performing the positioning measurement.

5. The method according to claim 4, further comprising:
sending auxiliary information to the network device, wherein the auxiliary information comprises at least one of time information required by the terminal to perform the positioning measurement or movement speed information of the terminal.

6. The method according to claim 4, further comprising:
receiving a plurality of pieces of candidate positioning measurement configuration information sent by the network device, wherein the plurality of pieces of candidate positioning measurement configuration information comprise the first positioning measurement configuration information; and
determining the first positioning measurement configuration information from the plurality of pieces of candidate positioning measurement configuration information.

7. The method according to claim 6, wherein determining the first positioning measurement configuration information from the plurality of pieces of candidate positioning measurement configuration information comprises:
determining the first positioning measurement configuration information from the plurality of pieces of candidate positioning measurement configuration information according to a correspondence between terminal status information and candidate positioning measurement configuration information;
wherein the plurality of pieces of candidate positioning measurement configuration information comprise the terminal status information.

8. The method according to claim 6, wherein determining the first positioning measurement configuration information from the plurality of pieces of candidate positioning measurement configuration information comprises:
receiving a control signaling sent by the network device; and
determining the first positioning measurement configuration information from the plurality of pieces of candidate positioning measurement configuration information according to the control signaling.

9. The method according to any of claims 5-8, further comprising:
sending second indication information to the network device, wherein the second indication information comprises a terminal capability, and the terminal capability comprises a capability of the terminal to perform the wireless communication interaction with the network device when performing the positioning measurement.

10. A global navigation satellite system (GNSS) positioning measurement method, performed by a network device, comprising:
sending first indication information to a terminal;
wherein the first indication information is configured to indicate whether the terminal performs wireless communication interaction with the network device when performing positioning measurement.

11. The method according to claim 10, further comprising:
sending first measurement configuration information to the terminal, wherein the first positioning measurement configuration information comprises at least one of:
a time domain position at which the positioning measurement is performed;
a time length during which the positioning measurement is performed; or
a trigger condition for performing the positioning measurement.

12. The method according to claim 11, further comprising:
receiving auxiliary information sent by the terminal, wherein the auxiliary information comprises at least one of time information required by the terminal to perform the positioning measurement or movement speed information of the terminal.

13. The method according to claim 12, further comprising:
sending a plurality of pieces of candidate positioning measurement configuration information to the terminal, wherein the plurality of pieces of candidate positioning measurement configuration information comprise the first positioning measurement configuration information.

14. The method according to claim 13, wherein
the plurality of pieces of candidate positioning measurement configuration information comprise terminal status information;
a correspondence between the terminal status information and positioning measurement configuration information is used for the terminal to determine the first positioning measurement configuration information from the plurality of pieces of candidate positioning measurement configuration information.

15. The method according to claim 13, further comprising:
sending a control signaling to the terminal;
wherein the control signaling is configured to instruct the terminal to determine the first positioning measurement configuration information from the plurality of pieces of candidate positioning measurement configuration information.

16. The method according to any of claims 13-15, further comprising:
receiving second indication information sent by the terminal, wherein the second indication information comprises a terminal capability, and the terminal capability comprises a capability of the terminal to perform the wireless communication interaction with the network device when performing the positioning measurement.

17. A global navigation satellite system (GNSS) positioning measurement apparatus, comprising:
a transceiver unit, configured to receive first indication information sent by a network device, wherein the first indication information is configured to indicate whether a terminal performs wireless communication interaction with the network device when performing positioning measurement; and
a processing unit, configured to perform the positioning measurement according to the first indication information.

18. A global navigation satellite system (GNSS) positioning measurement apparatus, comprising:
a transceiver unit, configured to send first indication information to a terminal;
wherein the first indication information is configured to indicate whether the terminal performs wireless communication interaction with a network device when performing positioning measurement.

19. A communication apparatus, comprising: a processor, and a memory for storing computer programs, when the computer programs stored in the memory are executed by the processor, the communication apparatus is caused to perform the method according to any one of claims 1 to 9.

20. A communication apparatus, comprising: a processor, and a memory for storing computer programs, when the computer programs stored in the memory are executed by the processor, the communication apparatus is caused to perform the method according to any one of claims 10 to 16.

21. A communication apparatus, comprising: a processor and an interface circuit, wherein
the interface circuit is configured to receive code instructions and transmit the code instructions to the processor; and
the processor is configured to run the code instructions to perform the method according to any one of claims 1 to 9.

22. A communication apparatus, comprising: a processor and an interface circuit, wherein
the interface circuit is configured to receive code instructions and transmit the code instructions to the processor; and
the processor is configured to run the code instructions to perform the method according to any one of claims 10 to 16.

23. A computer-readable storage medium for storing instructions, wherein when the instructions are executed, the method according to any one of claims 1 to 9 is implemented.

24. A computer-readable storage medium for storing instructions, wherein when the instructions are executed, the method according to any one of claims 10 to 16 is implemented.
